# EUROPEAN PATENT APPLICATION

(11) **EP 2 822 122 A1**
(43) Date of publication of application: **07.01.2015**
(21) Application number: 14175583.5
(22) Date of filing: 03.07.2014
(51) Int. Cl.: H02G 5/00

(54) **Busbar comprising a cover with a pest-repellent**

(30) Priority: 03.07.2013 US 201313934365
(71) Applicant: Rockwell Automation Technologies, Inc., Mayfield Heights, OH 44124 (US)
(72) Inventor: Leis, Kenneth K., Milwaukee, WI Wisconsin 53204 (US); Krause, Paul T., Milwaukee, WI Wisconsin 53204 (US)
(74) Representative: Grünecker, Kinkeldey, Stockmair & Schwanhäusser

(57) **Abstract**

Present embodiments include a system and method for providing a bus bar boot or cover for a bus bar feature formed from a material with an integral or non-integral pest repellent. The bus bar boot or cover may include a polymer formed with geometric features configured for formfitting about a bus bar component. The pest repellent may be integrated with the polymer or applied to the polymer.

## Description

### BACKGROUND

The present disclosure relates generally to the field of electrical power distribution and protectively enclosing electrically conductive components of a bus bar system that facilitates transmission of electrical signals and power. More particularly, present embodiments are directed to covers (e.g., insulative covers) for bus bar features or components.

In the field of electrical power distribution, a bus bar may be defined as a strip or bar of conductive material (e.g., copper or aluminum) arranged to conduct electricity between components of a system. Bus bars are typically flat strips or bars of material with generally rectangular geometric characteristics that communicatively couple electrical system components to facilitate transmission of electricity between the components. The flat geometry of such bus bars may facilitate heat dissipation due to a high ratio of surface area to cross-sectional area. Further, the cross-sectional sizes of bus bars correlate to the amount of current that can be properly transmitted via the respective bus bars.

While large portions of typical bus bars are often elongate with a rectangular and flat structure, bus bars often include irregular portions that facilitate connection of the bus bars to equipment and accommodation of geometric features of the systems in which they are utilized. For example, bus bars may include connectors that can be incorporated to shape the bus bar to accommodate available space, extend the bus bar from a primary path to couple with a device, splice two elongate components together, and so forth. Specifically, for example, bus bar connectors may include tee connectors, 90-degree connectors, 45-degree connectors, jumpers, and so forth.

It is typically desirable to include a protective barrier around electrically conductive bus bars. Such barriers limit the potential for undesired contact with exposed portions of active or hot bus bars that could result in damage, such as short-circuiting of equipment and so forth. Accordingly, bus bars and related devices are often housed in electrical enclosures or cabinets. An electrical enclosure may be described as a cabinet for housing or mounting electrical equipment to avoid undesired electrical contact and to protect the contents of the electrical enclosure from certain environmental conditions. Electrical enclosures often provide a first level of protection for enclosed bus bar components. However, it is often desirable to include a second level or protection for enclosed bus bar components or to provide protection for otherwise exposed bus bar components. Such protection often takes the form of a cover, such as a coating, a layer, a mold, or housing, disposed about one or more aspects of a bus bar. For example, bus bar boots often include insulative covers configured to be disposed about connector components of a bus bar. As another example, bus bar sleeves typically include insulative covers disposed about a bus bar.

### BRIEF DESCRIPTION

The present disclosure includes a system including a bus bar, a cover positioned around the bus bar, and a pest repellent disposed on or integral with material forming the cover.

The present disclosure also includes a bus bar boot. The bus bar boot may include a polymer formed with geometric features configured for formfitting about a bus bar component and a pest repellent integrated with the polymer.

The present disclosure is further includes a method that includes integrating a pest repellent with a polymer and forming the polymer, including the pest repellent, into a bus bar cover configured for formfitting with a bus bar component.

### DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram of an industrial automation bus bar system in accordance with an embodiment;
FIG. 2 is a block diagram of a bus bar system in an enclosure in accordance with an embodiment;
FIG. 3 is a front view of an electrical enclosure including a bus bar system in accordance with an embodiment;
FIG. 4 is a perspective view of a bus bar and bus bar covers in accordance with an embodiment; and
FIG. 5 is a process diagram of a method in accordance with an embodiment.

### DETAILED DESCRIPTION

The present disclosure is generally directed towards protectively enclosing electrically conductive components of a bus bar system that facilitates transmission of electrical signals and power. More specifically, present embodiments are directed to covers for insulating or otherwise protecting aspects or components of a bus bar system, wherein material forming the covers includes integrated or applied pest repellant.

It is now recognized that bus bar covers can be attractive to pests and that this can result in the pests causing substantial damage to not only the bus bar covers but to components of a related electrical system, which can result in damage to the entire electrical system. For example, it is now recognized that rodents have a tendency to chew on the material traditionally utilized to protectively cover bus bar components. Similarly, birds are often attracted to the material utilized in insulative materials for bus bars. Indeed, the bright colors, polymer texture, aromatic properties of polymers and plasticizers are all characteristics that can attract pests. This can lead to pests entering electrical enclosures (e.g., electrical cabinets), destroying insulative material around the bus bar (e.g., bus bar boots), and causing short-circuits. Such activity can further result in substantial damage to related equipment and the associated economic losses (e.g., due to downtime and repair).

Accordingly, present embodiments are directed to including an additive disposed on or integral with the insulative covers for a bus bar system. The additive (e.g., RODREPEL available from C Tech Corporation with an office located in Chalo St. Mars, France at 16 route de Boutervillier 91780) includes chemicals with characteristics that deter pests (e.g., rodents and birds) from chewing or pecking the insulative covers that incorporate the additive. The chemicals utilized in the additive may be aromatic extracts from predator urines (olfactory pest fear stimulant) to provoke a fear response in pests, chemical compounds that cause distress (e.g., distress to mucosa) when consumed by pests, and compounds that taste bad to pests. In some embodiments, the additive may include one or more poisons. However, poisons may be specifically excluded in certain embodiments to avoid killing the pests, which has cultural benefits in certain areas of the world and also generally prevents issues associated with pest carcasses. Further, excluding poisons may have environmental benefits as well, such as avoiding leaching out of the cover material.

In some embodiments, the additive is integrated within the insulative material when forming (e.g., polymerizing, extruding, injection molding, or dip molding) the material or insulative covers. Such embodiments may be utilized upon initial installation of the insulative covers. In some embodiments, the insulative covers may already be present in the system and a retrofit may be desirable. Accordingly, in some embodiments, the additive can be applied or disposed on (e.g., brushed on or sprayed on) already formed bus bar covers. Regardless of whether an additive in accordance with present embodiments is integrated or non-integrated into the insulative material, the additive is designed to deter pests without impacting other functional characteristics of the material (e.g., polymer) utilized to form the insulative covers. For example, the additive is generally integrated or added in a manner that does not cause the insulative material to be conductive or excessively brittle.

References in the specification to "embodiments," "one embodiment," "an embodiment," or "an exemplary embodiment," indicate that the embodiment or embodiments described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Additionally, geometric references are not intended to be strictly limiting. For example, use of the term "perpendicular" doe not require an exact right angle, but defines a relationship that is substantially perpendicular, as would be understood by one of ordinary skill in the art.

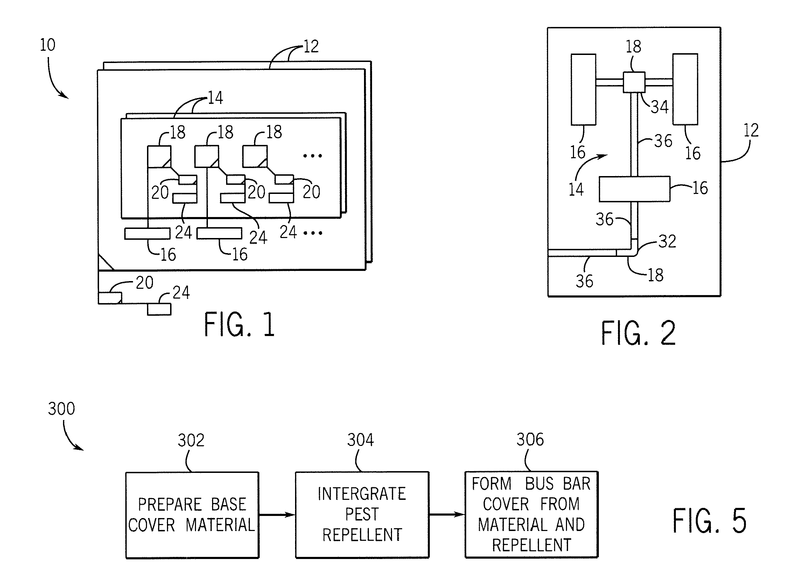

Turning now to the drawings and referring to FIG. 1, a schematic representation of a system utilizing bus bar protective features in accordance with present embodiments is provided. The system is generally indicated by reference numeral 10. In the illustrated embodiment, the system 10 includes, among other things, a plurality of enclosures 12, a plurality of bus bar systems 14 disposed within the enclosures 12, a plurality of electrical devices 16 communicatively coupled with the bus bar systems 14 via connectors 18, and insulative covers 20 that include a pest repellent additive 24 in accordance with present embodiments. It should be understood that this is merely a representative embodiment and that in other embodiments certain components may be added or excluded. For example, a single bus bar system 14 may be utilized in an embodiment instead of multiple bus bar systems 14. Further, insulative covers 20 may be disposed on some features and not others. Similarly, certain insulative covers 20 may not include the additive 24 in certain embodiments.

Specifically, the system 10 includes a plurality of enclosures 12 that may include electrical enclosures or cabinets. The enclosures 12 may serve to prevent unauthorized access to components (e.g., the bus bars 14 and electrical devices 16) disposed therein and/or to protect components disposed therein from environmental conditions. In some embodiments, the enclosures 12 include insulative covers 20 in the form of an outer surface (e.g., a shell extending over or between frame components) and the outer surface material may include an additive 24 in accordance with present embodiments, wherein the additive 24 functions as a pest repellent or deterrent. The additive 24 may be integral with the material of the outer surface (e.g., the outer surface material may be impregnated with the additive) or non-integral with the material of the outer surface (e.g., the additive 24 may be sprayed on the outer surface material).

In the illustrated embodiment, the enclosures 12 separately house the corresponding bus bar systems 14 and the related electrical devices 16. However, in some embodiments, the bus bars 14 may be networked across the enclosures 12. That is, the bus bar systems 14 may extend between enclosures via connectors 18 that function as jumpers or the like. In such embodiments, the bus bars 14 extending between enclosures 12 may be covered with insulative covers 20 (e.g., insulative sleeves, boots, coatings), enclosed by extensions of the enclosures 12, or generally inaccessible due to spacing between the enclosures 12. It should be noted that the bus bars 14 may be defined as including the connectors 18 that facilitate communicative coupling of the bus bars 14 with the electrical devices 16, with other bus bars 14, and so forth. Together, the connectors 18 define the shape of the bus bars 14. For example, the various connectors 18 (e.g., straight portions, splices, 90-degree connectors, 45-degree connectors, tee connectors) of a particular bus bar 14 may assemble such that the bus bar 14 conforms to the walls of the corresponding enclosure 12 while communicatively coupling with the electrical devices 16.

In addition to the protection provided by the enclosures 12, the bus bars 14 are also protected by the insulative enclosures 20 that directly engage the bus bars 14 and connectors 18. These insulative enclosures 20 may include polymer with the additive 24 as an integral or non-integral component. For example, the insulative enclosures 20 directly around and formfitting the bus bars 14 or connectors 18 may be coated or impregnated with the additive 24, which includes chemicals that repel pests (e.g., rodents, birds). The insulative enclosures 20 may take the form of a layer (e.g., powder coating), a wrapping (e.g., heat shrink wrap), or a stand-alone housing (e.g., a housing formed from dip coating or injection molding). The additive 24 may be incorporated into or disposed on the polymer (e.g., elastomer) forming the insulative enclosures 20 in a manner that does not substantially change the physical properties (e.g., conductivity, flexibility, elasticity) of the enclosures 20. As noted above, the same or a similar additive 24 may be incorporated into other aspects of the system 10 as well.

FIG. 2 is a schematic representation of an enclosure 12 including three electrical devices 16 communicatively coupled with a single bus bar 14. During operation, the bus bar 14 may function to provide power to the electrical devices 16. Because the three electrical devices 16 are not aligned, the bus bar 14 includes connectors 18 that conform the bus bar 14 to a geometry that facilitates connection with each of the electrical devices 16. Specifically, the illustrated connectors 18 include a flat 90-degree connector 32, a tee connector 34, and several straight portions 36. The bus bar 14 may also include connectors 18 behind the devices 16 that facilitate coupling the bus bar 14 with the electrical devices 16. The various connectors 18 may come in a wide range of different geometries to facilitate achieving a desired configuration. Accordingly, in order to protectively cover such geometries, corresponding covers 20 must be provided. Such covers 20 may be provided via coatings, wrappings, or housings. Depending on the nature of the required geometry, different methods of covering may be desirable. For example, connectors 18 with complex shapes may be difficult to cover using a shrink wrap and it may be desirable to utilize a pre-formed housing. Covers 20 that include pre-formed housings (stand-alone housings) with geometric features that correspond to the connectors 18 may be described as bus boots. For example, bus boots in accordance with present embodiments may include housings formed of polymer with the additive 24, wherein the housings are made from dip coating or injection molding. Bus boots may be useful when a bus bar component needs to be accessible for maintenance or the like because bus boots may be readily removable.

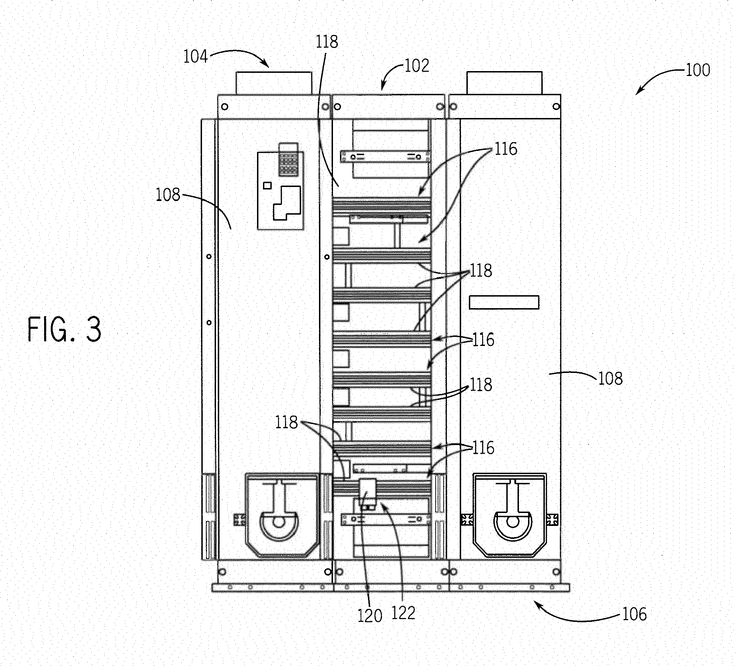

FIG. 3 illustrates an electrical enclosure 100 in accordance with present embodiments. Specifically, the electrical enclosure 100 is illustrated as including or housing electrical components of various types, which may be communicatively coupled together. A specific style of enclosure is illustrated by the enclosure 100 of FIG. 3 and certain components are illustrated. However, the enclosure 100 is considered an example and is not considered limiting. The enclosure 100 may be representative of a motor control center or other industrial, commercial, or marine electrical system in which a bus bar system including insulative covers with an additive for repelling pests in accordance with present embodiments may be utilized.

Specifically, in the illustrated embodiment, the enclosure 100 includes a wiring bay section 102 positioned between a pair of power drive sections 104, 106. In general, the enclosure 100 provides a protective shell around various electrical components and a bus system. For example, the enclosure 100 may include a shell 108 made of any suitable material, such as heavy gauge sheet metal, reinforced plastic, and so forth. The shell 108 may serve as an outer protective barrier for a set of bus bars 116 that passes along a panel of the enclosure 100 and through each of the enclosure sections (e.g., the wiring bay section 102 and each of the drive sections 104, 106).

The bus bars 116 include insulative covers 118 coupled about (e.g., adhered to, sprayed on, fastened over) components or portions of the bus bars 116. In the illustrated embodiment, each of the bus bars 116 includes a corresponding one of the insulative covers 118 disposed on an elongate expanse of the bus bars 116 that are visible. Further, the lowest bus bar 116 includes a bus bar boot 120 disposed over a connector 122. In other embodiments, portions of the bus bars 116 may remain exposed and/or different portions of the bus bars 116 not illustrated in FIG. 1 may be covered.

The insulative covers 118 may serve as a protective cover over the bus bars 116 to resist physical damage (e.g., chipping, denting, or gouging the surface of the bus bars 116) as well as providing insulation to avoid potential short-circuits. As described above, the insulative covers 118 may also include an integrated or non-integrated additive that deters pests in accordance with present embodiments. Like the covers 118, the shell 108 may provide protection to the bus bars 116 and also provide an outer protective barrier for various devices (e.g., programmable logic controllers, switches, motor controls, inverters, rectifiers) disposed along and/or coupled with the bus bars 116. Thus, the shell 108 may serve as an outer protective container that may incorporate integrated or non-integrated additives in accordance with present embodiments. By including the additive in or on the material forming the enclosure, pests may be deterred from ever approaching the bus bars 116 and associated insulative covers 118.

With regard to FIG. 3, it should be note that, in other embodiments, the bus bars 116 may be arranged and assembled differently. For example, the bus bars 116 may be assembled to have different lengths and may include different connectors (e.g., tee connectors, 90-degree connectors) that shape the bus bars 116 for use within the enclosure 100. The bus bars 116 are made of conductive material (e.g., copper or aluminum). Each of the bus bars 116 may be held in place within the enclosure 100 with a support system that includes bus support brackets that are formed from a non-conductive material to coordinate with the bus bars 116. Each support bracket may include an opening corresponding to cross-sectional features of the bus bars 116 such that the bus bars 116 can be retained without being fastened to the brackets. In some embodiments, end caps or the like may be positioned near or around the ends of the bus bars 116 such that the bus bars 116 can essentially float within the brackets without substantial lateral sliding. This flexibility facilitates attachment to features, such as the connectors 120 and electrical devices, by allowing slight movement of the bus bars 116 within the enclosure 100. Like the brackets, the end caps may include the non-conductive material. Further, the non-conductive material may include the additive 24 to repel pests in accordance with present embodiments.

During operation of the illustrated embodiment, the enclosure 100 receives power (e.g., three-phase AC power) from a source (e.g., an electrical grid) and distributes the power to various devices, including the drive systems 104, 106. Further, the various components of the drive systems 104, 106 cooperate to provide power at a desired level to a load (e.g., a motor or pump) external to the enclosure 100. As a group, the set of bus bars 116 receive and transmit the power to various components within the enclosure 100. Different groupings of the bus bars 116 are coupled to different features within the enclosure, and, thus, perform different tasks. For example, the upper three bus bars may receive input power, the middle two bus bars may transmit power between drive system components, and the lower three bus bars may provide output power. In other embodiments, the bus bars 116 may serve different functions. The bus bar covers 118 (e.g., bus bar boots) may provide insulative protection for the bus bars 116 and prevent potential short circuiting during operation by repelling pests with the pest repellent additive.

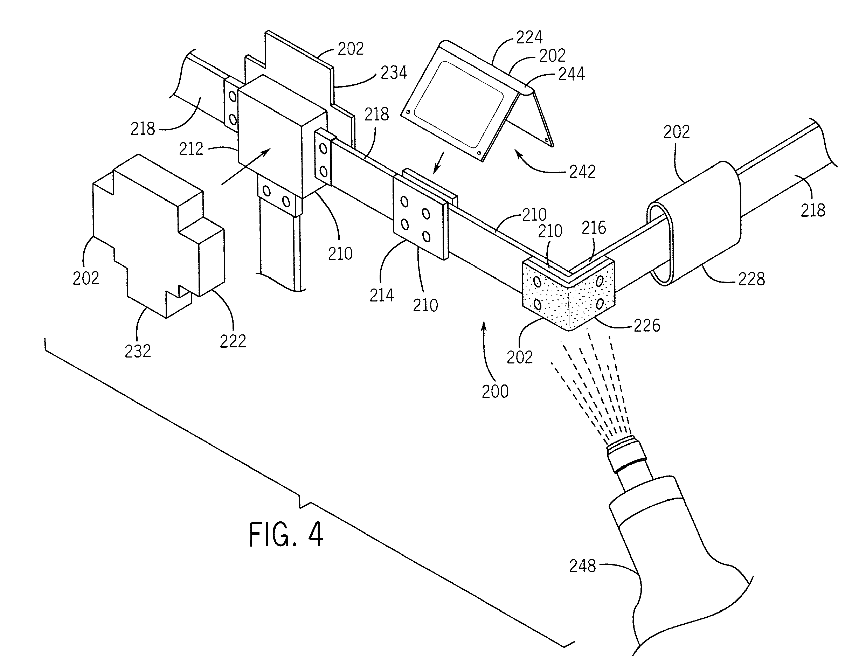

FIG. 4 is a perspective view of a bus bar 200 with bus bar covers 202 that include pest repellent in accordance with present embodiments. The bus bar 200 may be assembled in the illustrated manner to extend around and/or couple with electrical devices (e.g., devices 16), enclosure walls, and other features within an enclosure (e.g., enclosure 100). In the illustrated embodiment, the bus bar 200 includes various connectors 210 that are generally representative of the numerous different types of connectors that may be utilized to define the bus bar 200. Specifically, the connectors 210 include a tee-connector 212, a splice connector 214, and a 90-degree connector 216. In the illustrated embodiment, the bus bar 200 also includes various straight bus bar components 218. While specific bus bar components (e.g., connectors 210) are illustrated in FIG. 4, in other embodiments numerous different features with different shapes and purposes may be utilized. For example, device connectors that extent the reach of the bus bar 200 while facilitating communicative coupling with electrical devices may be employed in accordance with present embodiments.

FIG. 4 also illustrates various different types of formfitting connector covers 220, which geometrically correspond to aspects or features of the bus bar 200. Specifically, the covers 220 include a tee-connector boot 222, a splice connector boot 224, a layer 226, and a sleeve 228. While specific examples are illustrated in FIG. 4, the illustrated covers 220 are generally representative of various different styles of covers in accordance with present embodiments. In other embodiments, different types and shapes of the covers 220 may be utilized for the same or different bus bar features. The covers 220 may include boots, wraps, or coatings. A boot may be defined as a housing that is formed to correspond to the bus bar feature it covers. For example, a boot may be molded from a polymer including a pest repellent and later assembled or stretched about a bus bar component, which may require certain structural characteristics of the polymer. A wrap may include a sleeve, sheet (e.g., bulk sheet heat shrink), or ribbon (e.g., tape) of material that can be disposed about a bus bar feature. The wrap may adhere to the bus bar feature via an adhesive (which may also incorporate the pest repellent) or by being conformed to the geometry of the bus bar feature. For example, two sheets of wrap material (e.g., sheets of polymer with infused pest repellent) may be coupled together about a bus bar feature and fused (e.g., melted or heat shrunk) together about the bus bar feature. A coating may include a paint or powder coating. For example, the powder coating may include a powder made from small particles of polymer including pest repellent that are electrostatically applied to a bus bar feature and then cured to form a skin. As another example, the paint may include a liquefied material (e.g., polymer) that includes the pest repellent, wherein the paint can be sprayed, brushed, or otherwise disposed on the bus bar feature such that when the paint dries or is cured it forms a protective skin about the bus bar feature. Each of these types of covering may require slightly different structural and chemical properties.

Each of the covers 220 in FIG. 4 is generally representative of a covering technique in accordance with present embodiments. For example, the tee-connector boot 222, which includes a first side 232 and a second side 234, may be representative of a boot formed from an injection molding process. Specifically, the first and second sides 232, 234 may be formed by injecting melted polymer (including the additive 24 integrally or non-integrally) into one or more molds for setting. The molds may be defined such that, when the polymer cools and solidifies, it is shaped to correspond to the tee-connector 212. Thus, when the first and second sides 232, 234 are coupled together, they protectively enclose the tee-connector 212. The first and second sides 232, 234 may include integral coupling features (e.g., a latch and receptacle respectively built into each side 232, 234) in some embodiments. However, in other embodiments, the first and second sides 232, 234 may be coupled together with separate fasteners (e.g., screws or clips) or with adhesive. Such fasteners and/or adhesive may be formed with material that includes the additive 24 integrally or non-integrally.

The splice connector boot 224 may be representative of a boot formed from a dipped molding process. That is, the splice connector boot 224 may be formed by dipping a heated metal mold or mandrel into a liquid polymer (e.g., a liquid polyvinyl chloride) including pest repellent and then allowing the liquefied polymer to cool, which results in the polymer setting into a somewhat fixed geometry. The mold formed in this way may be trimmed to eliminate undesired portions and to facilitate use as a bus bar component cover 220. For example, a rough mold may be converted into the splice connector boot 224 by cutting the opening 242. This may facilitate removal of the mandrel and also enable coupling of the splice connector boot 224 about the splice connector 214. A hinge portion 244 around the edges of the splice connector boot 224 may be left in place to facilitate proper attachment and so forth.

The layer 226 may be representative of a sprayed, dipped, or brushed on coating that functions as a bus bar component cover. In the illustrated embodiment, the layer 226 is being sprayed onto the 90-degree connector 216 via spray gun 248. However, in other embodiments, the layer 226 may be applied to cover any component of the bus bar 200 via any of various different application methods. As discussed above, the layer 226 may be formed from a paint, powder coating, liquid polymer, or the like that includes a pest repellent in accordance with present embodiments. For example, a powder coating may include solid polymer particles and repellent that are mixed during spraying and electrostatically held onto a coated part until eventually combined by a melt process to form a skin.

The sleeve 228 may be representative of a wrap that functions as a pest repellent bus bar component cover in accordance with present embodiments. Specifically, the sleeve 228 in FIG. 4 includes a heat shrink material formed (e.g., extruded) into a generally cylindrical sleeve such that it can be slid about a bus bar component and then heated to shrink down into a tight seal with the bus bar component. The heat shrink material forming the sleeve 228 may include mechanically expanded and extruded polymer (e.g., nylon or polyolefin) that includes pest repellent. In other embodiments, different types of wraps and attachment procedures may be utilized. For example, a ribbon wrap or film application with or without adhesive may be utilized. If adhesive is utilized, the wrap material and/or the adhesive incorporate the pest repellent. As another example, sheets of material may be coupled or otherwise disposed about bus bar features and then shrunk or melted to conform to the geometry of the bus bar features.

FIG. 5 is a process flow diagram of a method 300 in accordance with present embodiments. In the illustrate method 300 various actions are illustrated in a particular order. However, it should be noted that certain of the illustrated actions may be performed in a different order or simultaneously in different embodiments. Further, certain actions may be completely excluded and/or additional actions may be performed in different embodiments.

In the illustrated example, the method 300 begins with preparation (process block 302) of a base cover material for a bus bar cover (e.g., cover 202). This may include preparation of a polymer, such as low-density polyethylene (LDPE), which is a thermoplastic made from ethylene. The polymer may be manufactured or simply acquired from a supplier. The type of polymer utilized may depend on the desired style of cover being prepared. For example, different polymers may be utilized for each of dipped molding, injection molding, painting, powder coating, heat shrink wrapping, adhesive wrapping, and so forth. The mechanical properties of the polymer should be taken into consideration and their potential interaction with the pest repellent that will be incorporated or applied.

Once the polymer is acquired or manufactured, the method 300 proceeds with incorporating or integrating (process block 304) a pest repellent additive with the polymer. The integration of the pest repellent into the polymer (process block 304) may be performed in a manner that has a limited impact on the mechanical properties of the polymer. The pest repellent may be essentially inert with respect to the polymer. Integrating the pest repellent with the polymer (process block 304) may include controlling ratios of polymer to repellent. Further, integrating the pest repellent may be achieved via any of various techniques. For example, a compounding technique may be utilized to incorporate the pest repellent into the polymer. This may include melting the polymer and blending it with the pest repellent, dissolving the polymer in a solvent and mixing with the pest repellent in a solution, swelling the polymer in a solvent and incorporating a solution of pest repellent, and so forth. In another embodiment, the pest repellent may be provided in a solid form along with a solid version of the polymer (e.g., pelletized polymer) and the two may be dry blended for later application and melting. In another embodiment, a vapor deposition process may be employed to impregnate the polymer with the pest repellent. In yet another embodiment, the actions of forming the polymer and incorporating the pest repellent may be combined by polymerizing the polymer in the presence of the pest repellent. In other embodiments, different manners of pest repellent addition may be utilized.

The repellent may include an additive that incorporates natural or synthetic components such as one or more of a aromatic stimulant (e.g., extracts from predator urine) with aversive affects to certain pests, an irritant that affects mucosa of certain pests, and a substance with a foul (e.g., bitter) taste. The components of the repellent may be assembled to have a strong impact on pests while avoiding potential harm to humans. Indeed, poisons may be excluded. However, in some embodiments, certain types of poisons may be included as well. The repellent may also be assembled to resist migration of the repellent within the polymer or leaching into the environment. As briefly mentioned above, the pest repellent integrated with the polymer may include RODREPEL available from C Tech Corporation with an office located in Chalo St. Mars, France at 16 route de Boutervillier 91780. Certain specifications for RODREPEL are set forth in Tables 1 and 2 below:

**TABLE 1**

| | | | | |
|---|---|---|---|---|
| Product Name: | RODREPEL 2511 Solution in Ethanol | | | |
| Specific Gravity: | 0.855 (+/-) 0.01 | | | |

| Ethanol Specifications | | | | |
|---|---|---|---|---|
| TEST | | DESCRIPTION | | METHOD |
| Appearance: | | Clear solution; colorless liquid-reddish color | | Visual |
| Ethanol content @ 15.6°C % V/V | | 99.9 | | IS: 323 |
| Moisture content % V/V | | 0.1 | | IS: 323 |
| Miscibility with water | | Miscible | | IS: 323 |
| Alkalinity | | Nil | | IS: 323 |
| Acidity (as Acetic acid) % W | | 0.0011 | | IS: 323 |
| Residue on evaporation % W | | 0.0021 | | IS: 323 |
| Aldehydes g/100 ml | | Not detected | | GC |
| Ester content g/100 ml | | 0.0075 | | GC |
| Cropper as (cu) g/100 ml | | Not detected | | AAS |
| Lead as (pb) g/100 ml | | Not detected | | AAS |
| Methyl alcohol g/100 ml | | Not detected | | GC |
| Total higher alcohols (g/100 ml) | | | | GC |
| Iso-propanol | | Not detected | | |
| N-propanol | | Not detected | | |
| Iso-butanol | | Not detected | | |
| N-butanol | | Not detected | | |

**TABLE 2**

| | |
|---|---|
| Product Name: | RODREPEL RR2511-9 |
| Composition: | Essential oil proprietary formulation 60% + 40% ethanol |
| Stability: | Thermally stable up to 50°C |
| Flash point: | 16.6°C |
| Auto-ignition temperature: | 363°C |
| Vapor pressure: | 59.3 mm Hg at 20°C |
| Vapor density: | 1.59 |
| Viscosity: | 1.200 cP at 20°C |
| Boiling point: | 78°C |
| Freezing/melting point: | -114.1°C |
| Solubility: | Miscible |
| Specific gravity/density: | 0.790 at 20°C |
| Molecular formula: | C₂H₅OH |
| Boiling point: | 64.7°C at 101.3 kPa |
| Critical temperature: | 239.4°C |
| Relative density: | 0.791 |
| Evaporation rate: | 4.1 (n-butyl acetate =1) |
| Partition coefficient: | Log P (oct) = -0.82 |
| Solubility in other liquids: | Soluble in all portions in other alcohols, esters, keytones, ethers and most other organic solvents |

Once the repellant and polymer have been combined, the polymer including the repellant may be formed (process block 306) into a cover for a bus bar. This may include molding the polymer into a housing, spraying or painting the polymer onto a bus bar component, extruding the polymer into a sheath, and so forth. Various techniques for defining and applying bus bar covers are discussed and illustrated above with respect to FIG. 4. It should be noted that certain techniques for providing covers include covers that are capable of being removed and replaced. For example, a cover in the form of a bus bar boot (e.g., tee connector boot 222) may be desirable to enable a user to remove the cover for inspection and maintenance (e.g., maintaining torque on fasteners) of certain bus bar features.

The method 300 illustrated in FIG. 5 represents a process for providing a bus bar cover with integral pest repellent. However, in some embodiments, it may be desirable to provide a retrofit. For example, an existing enclosure may include a bus bar with bus bar covers that do not have integrated pest repellent. In such a situation, it may be desirable to add or apply pest repellent. This may include spraying pest repellent onto existing polymer bus bar covers, injecting pest repellent into the bus bar covers, brushing the pest repellent onto the bus bar covers, and so forth. In such embodiments, the pest repellent may be incorporated with adhesive, paint, or polymer that is designed to adhere to the surface or integrate with the material forming the existing covers.

While only certain features of the invention have been illustrated and described herein, many modifications and changes will occur to those skilled in the art. It is, therefore, to be understood that the appended claims are intended to cover all such modifications and changes as fall within the true spirit of the invention. The following is a list of further preferred embodiments of the invention:
Embodiment 1. A system, comprising:
   a bus bar;
   a cover positioned around the bus bar; and
   a pest repellent disposed on or integral with material forming the cover.
Embodiment 2. The system of embodiment 1, wherein the material forming the cover comprises a low density polyethylene.
Embodiment 3. The system of embodiment 1, wherein the cover is coupled with the bus bar in a formfitting engagement with a portion of the bus bar.
Embodiment 4. The system of embodiment 3, wherein the cover comprises a layer of polymer that is sprayed or painted on to the portion of the bus bar, wherein the pest repellent is integral with the polymer.
Embodiment 5. The system of embodiment 3, wherein the cover comprises a dip molded bus bar boot formed of a flexible polymer.
Embodiment 6. The system of embodiment 3. wherein the cover comprises an injection molded bus bar boot formed of a polymer.
Embodiment 7. The system of embodiment 3, wherein the cover comprises a heat shrink wrap formed of a polymer.
Embodiment 8. The system of embodiment 1, wherein the material forming the cover comprises a polymer and the pest repellent is integrated with the polymer.
Embodiment 9. The system of embodiment 1, wherein the pest repellent comprises a composition of chemicals including pest aversive, a pest mucosa stimulant, and an olfactory pest fear stimulant.
Embodiment 10. The system of embodiment 9, wherein the pest repellent excludes poison.
Embodiment 11. The system of embodiment 9, wherein the bus bar comprises a plurality of connectors with varying geometries and a plurality of covers within respective formfitting arrangements with the plurality of connectors.
Embodiment 12. The system of embodiment 1, wherein the material forming the cover comprises a non-conductive material and the pest repellent is inert with respect to the non-conductive material.
Embodiment 13. The system of embodiment 1, wherein the cover comprises a stand-alone housing with geometric features that are configured for formfitting attachment to a particular bus bar feature.
Embodiment 14. The system of embodiment 1, wherein a cross-section of the bus bar is substantially rectangular.
Embodiment 15. A bus bar boot, comprising:
   a polymer formed with geometric features configured for formfitting about a bus bar component; and
   a pest repellent integrated with the polymer.
Embodiment 16. The bus bar boot of embodiment 15, wherein the pest repellent is inert with respect to the polymer.
Embodiment 17. The bus bar boot of embodiment 15, wherein the pest repellent comprises a composition of chemicals including a pest aversive, a pest mucosa stimulant, and an olfactory pest fear stimulant.
Embodiment 18. The bus bar boot of embodiment 17, wherein the pest repellent excludes poison.
Embodiment 19. The bus bar boot of embodiment 15, wherein the bus bar boot comprises a housing for a 90-degree bus bar connector, a bus bar tee connector, a 45-degree bus bar connector, a bus bar splice connector, or a straight length of bus bar.
Embodiment 20. A method, comprising:
   integrating a pest repellent with a polymer; and
   forming the polymer, including the pest repellent, into a bus bar cover configured for formfitting with a bus bar component.
Embodiment 21. The method of embodiment 20, comprising polymerizing the polymer with the pest repellent present, dry mixing the pest repellent and the polymer, or compounding the pest repellent and polymer.
Embodiment 22. The method of embodiment 20, comprising mixing the polymer with the pest repellent, wherein the pest repellent comprises a composition of chemicals including a pest aversive, a pest mucosa stimulant, and an olfactory pest fear stimulant.

## Claims

1. A system. comprising:
a bus bar;
a cover positioned around the bus bar; and
a pest repellent disposed on or integral with material forming the cover.

2. The system of claim 1, wherein the material forming the cover comprises a low density polyethylene.

3. The system of claim 1 or 2, wherein the cover is coupled with the bus bar in a formfitting engagement with a portion of the bus bar.

4. The system of claim 3, wherein the cover comprises a layer of polymer that is sprayed or painted on to the portion of the bus bar, wherein the pest repellent is integral with the polymer.

5. The system of claim 3 or 4, wherein the cover comprises a dip molded bus bar boot formed of a flexible polymer.

6. The system of any one of claims 3 to 5, wherein the cover comprises an injection molded bus bar boot formed of a polymer.

7. The system of any one of claims 3 to 6, wherein the cover comprises a heat shrink wrap formed of a polymer.

8. The system of any one of claims 1 to 7, wherein the material forming the cover comprises a polymer and the pest repellent is integrated with the polymer.

9. The system of any one of claims 1 to 8, wherein the pest repellent comprises a composition of chemicals including pest aversive, a pest mucosa stimulant, and an olfactory pest fear stimulant.

10. The system of claim 9, wherein the pest repellent excludes poison.

11. The system of claim 9 or 10, wherein the bus bar comprises a plurality of connectors with varying geometries and a plurality of covers within respective formfitting arrangements with the plurality of connectors.

12. The system of any one of claims 1 to 11, wherein the material forming the cover comprises a non-conductive material and the pest repellent is inert with respect to the non-conductive material.

13. A method, comprising:
integrating a pest repellent with a polymer; and
forming the polymer, including the pest repellent, into a bus bar cover configured for formfitting with a bus bar component.

14. The method of claim 13, comprising polymerizing the polymer with the pest repellent present, dry mixing the pest repellent and the polymer, or compounding the pest repellent and polymer.

15. The method of claim 13 or 14, comprising mixing the polymer with the pest repellent, wherein the pest repellent comprises a composition of chemicals including a pest aversive, a pest mucosa stimulant, and an olfactory pest fear stimulant.
